# EUROPEAN PATENT APPLICATION

(11) **EP 1 515 575 A1**
(43) Date of publication of application: **16.03.2005**
(21) Application number: 03292262.7
(22) Date of filing: 15.09.2003
(51) Int. Cl.: H04Q 7/38

(54) **A 3rd generation cellular communication network, user equipment and method for the communication of paging indication messages**

(71) Applicant: MOTOROLA, INC., Schaumburg, IL 60196 (US)
(72) Inventor: Al-Bakri, Ban, 06160 Juan Les Pins (FR); Burbidge, Richard, Hook Hampshire RG27 9NP (GB); Cai, Zhijun, N. Richland Hills Texas 76180 (US)
(74) Representative: Jepsen, Rene Pihl

(57) **Abstract**

The invention relates to multiplexing of paging indication messages in a 3^{rd} generation cellular communication system. In a first embodiment, a paging indication message is generated by an RNC (301) and transmitted on a paging indication channel (PICH) by a base station (309). The RNC (301) comprises a first data subset processor (303) which generates a first data subset of the paging indication message comprising data bits indicating to which service the paging indication message relates. A second data subset processor (305) generates a second data subset of the paging indication message comprising information related to the indicated service. The first and second data subsets are combined in a combine processor (307) before being transmitted to the base station (309). In a second embodiment, information of which service the paging indication message relates to is not comprised in the paging indication message but is broadcast on a broadcast channel. The invention allows for a paging indication message to be allocated to more than one service and particularly allows for a future proof and flexible standardisation process.

## Description

### Field of the invention

The invention relates to a network and user equipment for a 3rd generation cellular communication system and a method of operation therefor and in particular to communication of paging indication messages in a 3^{rd} Generation communication system.

### Background of the Invention

Currently, 3rd generation systems are being rolled out to further enhance the communication services provided to mobile users. The most widely adopted 3rd generation communication systems are based on Code Division Multiple Access (CDMA) wherein user separation is obtained by allocating different spreading and scrambling codes to different users on the same carrier frequency. The transmissions are spread by multiplication with the allocated codes thereby causing the signal to be spread over a wide bandwidth. At the receiver, the codes are used to de-spread the received signal thereby regenerating the original signal. Each base station has a code dedicated for a pilot and broadcast signal which is used for measurements of multiple cells in order to determine a serving cell. An example of a communication system using this principle is the Universal Mobile Telecommunication System (UMTS), which is currently being deployed. Further description of CDMA and specifically of the Wideband CDMA (WCDMA) mode of UMTS can be found in 'WCDMA for UMTS', Harri Holma (editor), Antti Toskala (Editor), Wiley & Sons, 2001, ISBN 0471486876.

A 3^{rd} Generation communication system such as UMTS is very complex and in order to ensure compatibility between different elements of the communication system, detailed standards to which the operation of all elements must comply have been developed.

The developed standards are defined in technical specifications developed and published by the 3^{rd} Generation Partnership Project formed by a group of the most influential telecommunication standard bodies in the world. These specifications define many different physical and logical communication and support functions required for the successful operation of the communication system. In addition, the technical specifications define many logical and physical communication channels. These channels include for example shared or dedicated communication channels used for communicating user data as well as various control channels used for control and monitoring data supporting the operation of the system.

In a 3^{rd} Generation communication system, a user equipment may be idle or in connected mode. When the user equipment is in idle or connected mode, power is conserved as much as possible in order to maximise the battery life. Thus, the user equipment is typically dormant and inactive for the majority of time and only performs the minimum of functions. Specifically, the user equipment continues to monitor for paging indication messages intended for the user equipment. Such a paging indication messages may for example be generated and transmitted in order to alert the user equipment to the presence of an incoming call.

In UMTS, a Paging Indication CHannel (PICH) is defined wherein paging indications may be transmitted to user equipment. The PICH is divided into frames comprising a plurality of time slots. Based on the identity of the user equipment, a user equipment and a base station may independently determine which time slot of a frame should be used for paging indications to the user equipment. Accordingly, the user equipment is dormant for the majority of time slots and only monitors for paging indications in the specific time slots where paging indications directed at the specific user equipment may be transmitted by the base station. This results in lower power consumption.

As defined in the UMTS technical specifications, if an idle or connected mode user equipment detects that a paging indication has been received on the PICH, it exits the idle state and proceeds to monitor a suitable paging channel for further messages.

In the current UMTS standards, the PICH channel comprises 12 spare bits per frame which are currently not specified for any specific purpose. It would be advantageous if these unallocated data bits could be used to support further functionality or improve performance in a UMTS cellular communication system. However, in order to enhance the flexibility of the communication system, it is undesirable to allocate the 12 spare data bits to a specific functionality or service. For example, if the standards specify a specific use for the spare data bits, these are limited to only improve this specific service and can for example not be used for future services. Thus if the 12 spare bits are currently allocated to a specific service, all available resource of the PICH is fully utilised and no spare data will in the future be available for any new services or functions. This may significantly limit the development and introduction of new services benefiting from use of paging indications.

Furthermore, the allocation of the 12 spare bits to a specific service may result in a user equipment supporting the service needing to monitor the PICH not only for dedicated paging indications transmitted in the appropriate time slot but also for the 12 spare bits. This may significantly increase power consumption resulting in reduced battery life.

Hence, an improved 3^{rd} Generation communication system would be advantageous and in particular a system for using available data on a paging indication channel and allowing for increased flexibility, performance, future proofing and/or reduced power consumption would be advantageous.

### Summary of the Invention

Accordingly, the Invention seeks to preferably mitigate, alleviate or eliminate one or more of the above mentioned disadvantages singly or in any combination.

According to a first aspect of the invention there is provided network for a 3^{rd} generation cellular communication system comprising: means for generating a paging indication message; and means for transmitting the paging indication message in a paging indication channel (PICH); wherein the paging indication message comprises a first data section comprising a first subset of data bits and a second subset of data bits, the first subset of data bits indicating a first service and the second subset of data bits comprising information for the first service.

The invention allows for increased flexibility of the use of a paging indication in a 3^{rd} generation cellular communication system and thereby allows for increased performance of the communication system as a whole. For example, in an embodiment of the invention, the spare bits of the PICH of a UMTS communication system may be allocated to a first service without preventing that a different service may be supported by the 12 bits in the future.

Specifically, the first subset of data bits may e.g. comprise 2data bits which may indicate one of four services for which the paging indication is intended. The remaining 10 data bits may be used for specific information which can be used by the first data service. Depending on the application other numbers of bits may be used in the first and second subset and specifically the second subset may be empty and comprise no data bits.

Accordingly, the invention allows for a system wherein a paging indication message may be multiplexed between different services by the first subset of data bits indicating which service the current paging indication message relates to.

The invention allows for a flexible use of a paging indication message and allows for this to be allocated to a service while allowing that it may be used for another service at another time. The invention may specifically allow for a future proof standardisation wherein a standardisation of a paging indication message for a specific service is such that it allows for the paging indication message to additionally being allocated to another service in a future version of the standard.

The information comprised in the second subset may specifically be dummy, optional or redundant information.

According to a feature of the invention, the paging indication message is common for a plurality of user equipment using the first service. For example, the first service may utilise broadcast information and the paging indication message may indicate that the broadcast information is being transmitted. Hence, a single paging indication message may be used by a plurality of user equipment and the identification that the paging indication message is relevant for a given user equipment can be determined simply from a detection of the service indication comprised in the first section.

Hence, an efficient and flexible system for sending paging indication messages to a plurality of user equipment using the first service is facilitated.

According to another feature of the invention, the first data service is a multimode broadcast multicast service (MBMS). The invention allows for a paging indication message and specifically for the 12 spare bits of a UMTS PICH channel to be allocated to support an MBMS service while maintaining flexibility and allowing for the paging indication message (and the 12 spare bits) to additionally be used for other services in the future. Hence, improvements can be made to the MBMS service without sacrificing performance of future services.

According to another feature of the invention, the network further comprises means for determining if a paging indication is required for the first data service and the means for transmitting the paging indication message is operable to transmit the paging indication message only when the paging indication is required.

This may allow for facilitated implementation and in particular may allow for reduced power consumption of a user equipment as this only needs to monitor for the paging indication message when this may possible be transmitted. For example, a paging indication message may only be transmitted in some paging cycles, paging frames or paging time slots and the user equipment may only monitor these paging cycles, frames or time slots.

According to another feature of the invention, the information for the first service comprises an identification of a second message comprising additional information for the first service.

This allows for an efficient paging implementation with an efficient use of the PICH channel. Specifically, it allows for a very short paging indication message to alert a user equipment to the presence or requirement for accessing additional information. For example, the 12 data spare data bits of a UMTS PICH channel may be used to page the user equipment while allowing for significantly increased amounts of information to be received. The second message may be of any suitable duration and may specifically be shorter or longer than the paging cycle depending on the specific application.

According to another feature of the invention, the network further comprises means for transmitting the second message on a second channel different than the paging indication channel (PICH).

This allows for an efficient implementation where the resource use of the limited capacity PICH channel is kept low. It may thus allow amounts of information to be communicated which are limited by the capacity of the second channel rather than the capacity of the PICH.

According to another feature of the invention, the second channel is an MBMS Control CHannel (MCCH). This allows for a particular advantageous implementation and specifically allows for an efficient implementation if the first data service is an MBMS service. In particular, this provides a suitable implementation suited for a UMTS communication system.

According to another feature of the invention, the second message is time offset with respect to the paging indication message.

Preferably, the start of the second message is delayed with respect to the paging indication message. This may allow for a user equipment to monitor for the paging indication message and if received may activate the functionality required in time for receiving the second message. Hence an efficient implementation ensuring that the second message can be received by the user equipment may be achieved.

According to another feature of the invention, the second message has a duration of less than a paging cycle. This provides for a suitable implementation and may specifically ensure that a user equipment can receive the second message and be ready to monitor for paging indication messages in the following paging cycle and that the second message can be received by all user equipment within a duration of one paging cycle without requiring that two or more versions of the second message is transmitted in each paging cycle. The paging cycle may specifically correspond to the cycle between time slots of the PICH allocated to the user equipment or may correspond to the maximum cycle between paging time slots allocated to a user equipment of e.g. a cell of the 3^{rd} generation cellular communication system.

According to another feature of the invention, the second message is transmitted more than once during a paging cycle. This may facilitate the reception of the second message by the user equipment and may specifically allow for reception of the second message by all user equipment regardless of which time slot of the PICH is monitored.

According to another feature of the invention, the means for generating the paging indication message resides in a Radio Network Controller (RNC). This allows for a suitable implementation compatible with e.g. the architecture and information flows of a UMTS communication system.

According to a second aspect of the invention, there is provided a user equipment for a 3^{rd} generation cellular communication system comprising^{:} means for receiving a paging indication message in a paging indication channel (PICH); the paging indication message comprising a first data section comprising a first subset of data bits and a second subset of data bits, the first subset of data bits indicating a first service and the second subset of data bits comprising information for the first service; means for identifying the first service in response to the first subset of data bits; and means for activating operations of the first data service in response to the identification of the first service and the information of the second subset of data bits.

According to a third aspect of the invention, there is provided method of operation for a 3^{rd} generation cellular communication system comprising: generating a paging indication message; and transmitting the paging indication message in a paging indication channel (PICH); wherein the paging indication message comprises a first data section comprising a first subset of data bits and a second subset of data bits, the first subset of data bits indicating a first service and the second subset of data bits comprising information for the first service.

According to a fourth aspect of the invention, there is provided a network for a 3^{rd} generation cellular communication system comprising means for generating a first paging indication associated with a first service; means for comprising the first paging indication in a paging indication message; means for transmitting the paging indication message in a paging indication channel (PICH); and means for transmitting paging indication information on a broadcast channel, the paging indication information indicating when the paging indication message comprises the first paging indication.

The invention allows for increased flexibility of the use of a paging indication in a 3^{rd} generation cellular communication system and thereby allows for increased performance of the communication system as a whole. For example, in an embodiment of the invention, the 12 spare bits of the PICH of a UMTS communication system may be allocated to a first service without preventing that a different service may be supported by the 12 bits in the future.
Specifically, the paging indication information may be used to determine when the paging indication message relates to a desired service and the paging indication message may be ignored at all other times.

Accordingly, the invention allows for a system wherein a paging indication message may be multiplexed between different services by the paging indication information indicating which service the current paging indication message relates to.

The invention allows for a flexible use of a paging indication message and allows for this to be allocated to a service while allowing that it may be used for another service at another time. The invention may specifically allow for a future proof standardisation wherein a standardisation of a paging indication message for a specific service is such that it allows for the paging indication message to additionally be allocated to another service in a future version of the standard.

The invention may additionally or alternatively allow for reduced power consumption of user equipment of the cellular communication system. Specifically, the user equipment may remain in the inactive state and not monitor for paging messages unless the paging indication information indicates that the paging indication message relates to a desired service.

According to a feature of the invention, the network further comprises means for generating a second paging indication associated with a second paging service data, the paging indication information further indicates when the paging indication message comprises the second paging indication message and the means for comprising is operable to comprise either the first paging indication or the second paging indication in the paging indication message.

This allows for a paging indication message to be shared between different services and allows for a user equipment to efficiently determine when the paging indication message relates to a desired service. The two services may in some embodiments be simultaneously active and the paging indication message may dynamically alternate between relating to the first or second service. In some embodiments, only one service is active at any given time and the paging indication information may simply indicate which service is currently active.

According to a different feature of the invention, the broadcast channel is a Broadcast Control CHannel (BCCH). This allows for a particularly suitable implementation compatible with a UMTS communication system.

According to a different feature of the invention, the paging indication message is common for a plurality of user equipment using the first service. For example, the first service may utilise broadcast information and the paging indication message may indicate that the broadcast information is being transmitted. Hence, a single paging indication message may be used by a plurality of user equipment and the identification that the paging indication message is relevant for a given user equipment can be determined simply from the information of the paging indication information.

Hence, an efficient and flexible system for sending paging indication messages to a plurality of user equipment using the first service is facilitated.

According to a different feature of the invention, the first data service is a multimode broadcast multicast service (MBMS). The invention allows for a paging indication message and specifically for the 12 spare bits of a UMTS PICH channel to be allocated to support a MBMS service while maintaining flexibility and allowing for the paging indication message (and the 12 spare bits) to alternatively or additionally be used for other services in the future. Hence, improvements can be made to the MBMS service without sacrificing performance of future services.

According to a different feature of the invention, the network further comprises means for determining if a paging indication is required for the first data service and the means for transmitting the paging indication message is operable to transmit the paging indication message only when the paging indication is required.

This may allow for facilitated implementation and in particular may allow for reduced power consumption of a user equipment as this only needs to monitor for the paging indication message when this may be transmitted. For example, a paging indication message may only be transmitted in some paging cycles, paging frames or paging time slots and the user equipment may only monitor these paging cycles, frames or time slots.

According to a different feature of the invention, the first paging indication comprises an identification of a second message comprising additional information for the first service.

This allows for an efficient paging implementation with an efficient use of the PICH channel. Specifically, it allows for a very short paging indication message to alert user equipment to the presence or requirement for accessing additional information. For example, the 12 spare data bits of a UMTS PICH channel may be used to page the user equipment while allowing for significantly increased amounts of information to be received. The second message may be of any suitable duration and may specifically be shorter or longer than the paging cycle depending on the specific application.

According to a different feature of the invention, the network further comprises means for transmitting the second message on a second channel different than the paging indication channel (PICH). This allows for an efficient implementation where the resource use of the limited capacity PICH channel is kept low. It may thus allow amounts of information to be communicated which are limited by the capacity of the second channel rather than the capacity of the PICH.

According to a different feature of the invention, the second channel is an MBMS Control CHannel (MCCH). This allows for a particular advantageous implementation and specifically allows for an efficient implementation if the first data service is an MBMS service. In particular, this provides a suitable implementation suited for a UMTS communication system.

According to a different feature of the invention, the second message is time offset with respect to the paging indication message. Preferably, the start of the second message is delayed with respect to the paging indication message.

This may allow for a user equipment to monitor for the paging indication message and if received may activate the functionality required in time for receiving the second message. Hence an efficient implementation ensuring that the second message can be received by the user equipment may be achieved.

According to a different feature of the invention, the second message has a duration of less than a paging cycle. This provides for a suitable implementation and may specifically ensure that a user equipment can receive the second message and be ready to monitor for paging indication messages in the following paging cycle and that the second message can be received by all user equipment within a duration of one paging cycle without requiring that two or more versions of the second message is transmitted in each paging cycle. The paging cycle may specifically correspond to the cycle between time slots of the PICH allocated to the user equipment or may correspond to the maximum cycle between paging time slots allocated to a user equipment of e.g. a cell of the 3^{rd} generation cellular communication system.

According to a different feature of the invention, the second message is transmitted more than once during a paging cycle. This may facilitate the reception of the second message by the user equipment and may specifically allow for reception of the second message by all user equipment regardless of which time slot of the PICH is monitored.

According to a different feature of the invention, the means for generating the first paging indication resides in a Radio Network Controller (RNC). This allows for a suitable implementation compatible with e.g. the architecture and information flows of a UMTS communication system.

According to a different feature of the invention, the paging indication information comprises scheduling information associated with the paging indication channel. This allows for the user equipment to autonomously determine when to monitor for paging indication messages and thus conserve power.

According to a fifth aspect of the invention, there is provided a user equipment for a 3^{rd} generation cellular communication system comprising: means for receiving paging indication information on a broadcast channel, the paging indication information indicating when a paging indication message comprises a first paging indication associated with a first serviced and means for receiving the paging indication message in a paging indication channel (PICH) in response to the paging indication information; and means for activating operations of the first data service in response to the first paging indication.

According to a sixth aspect of the invention, there is provided a method of operation for a 3^{rd} generation cellular communication system comprising: generating a first paging indication associated with a first service; comprising the first paging indication in a paging indication message; transmitting the paging indication message in a paging indication channel (PICH); and transmitting paging indication information on a broadcast channel the paging indication information indicating when the paging indication message comprises the first paging indication.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 is an illustration of a UMTS cellular communication system;
FIG. 2 illustrates an example of a Paging Indication CHannel (PICH) for a UMTS communication system;
FIG. 3 illustrates elements of a UMTS communication system in accordance with an embodiment of the invention; and
FIG. 4 illustrates elements of a UMTS communication system in accordance with a second embodiment of the invention.

### Detailed Description of a Preferred Embodiment of the Invention

The following description focuses on an embodiment of the invention applicable to a UMTS cellular communication system but it will be appreciated that the invention is not limited to this application.

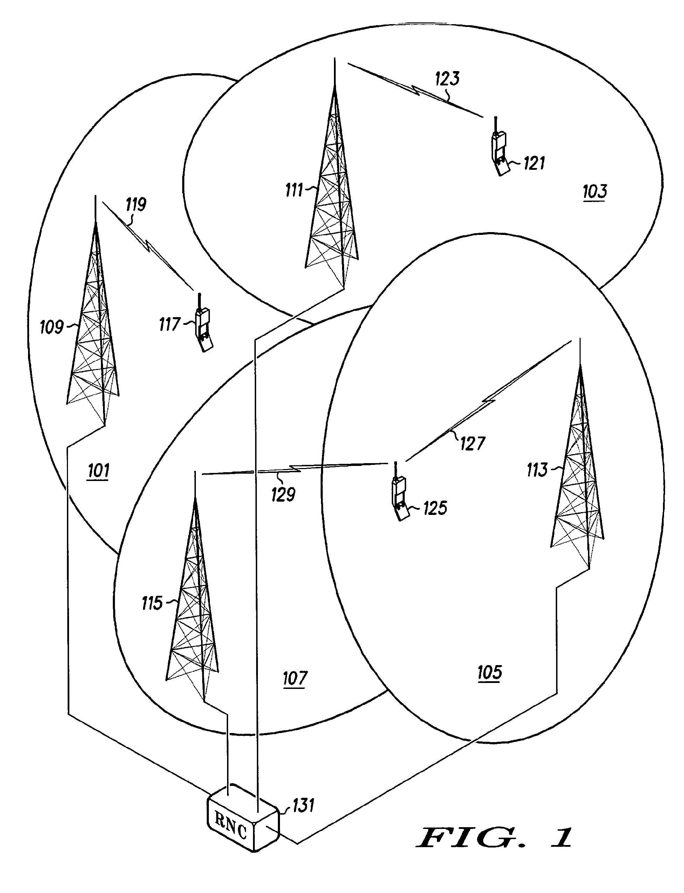

FIG. 1 illustrates the principle of a UMTS cellular communication system 100. A geographical region is divided into a number of cells 101, 103, 105, 107 each of which is served by base station 109, 111, 113, 115. The base stations are interconnected by a fixed network which can communicate data between the base stations 109, 111, 113, 115. A user equipment is served via a radio communication link by the base station of the cell within which the user equipment is situated. In the example of FIG. 1, user equipment 117 is served by base station 109 over radio link 119, user equipment 121 is served by base station 111 over radio link 123 and so on.

As a user equipment moves, it may move from the coverage of one base station to the coverage of another, i.e. from one cell to another. For example user equipment 125 is initially served by base station 113 over radio link 127. As it moves towards base station 115 it enters a region of overlapping coverage of the two base stations 113 and 115 and within this overlap region it changes to be supported by base station 115 over radio link 129. As the user equipment 125 moves further into cell 107, it continues to be supported by base station 115. This is known as a handover or handoff of a user equipment between cells.

Communication from a user equipment to a base station is known as uplink, and communication from a base station to a user equipment is known as downlink.

The fixed network interconnecting the base stations is operable to route data between any two base stations, thereby enabling a user equipment in a cell to communicate with a user equipment in any other cell. In addition the fixed network comprises gateway functions for interconnecting to external networks such as the Public Switched Telephone Network (PSTN), thereby allowing user equipments to communicate with landline telephones and other communication terminals connected by a landline. Furthermore, the fixed network comprises much of the functionality required for managing a conventional cellular communication network including functionality for routing data, admission control, resource allocation, subscriber billing, user equipment authentication etc.

In a UMTS communication system, the communication network comprises a core network and a Radio Access Network (RAN). The core network is operable to route data from one part of the RAN to another, as well as interfacing with other communication systems. In addition, it performs many of the operation and management functions of a cellular communication system, such as billing. The RAN is operable to support the wireless user equipment over a radio link being part of the air interface. The wireless user equipment may be a user equipment, a communication terminal, a personal digital assistant, a laptop computer, an embedded communication processor or any communication element communicating over the air interface.

The RAN comprises the base stations, which in UMTS are known as Node Bs, as well as Radio Network Controllers (RNC) which control the Node Bs and the communication over the air interface. Thus, the RNC performs many of the control functions related to the air interface including radio resource management and routing of data to and from appropriate Node Bs. It further provides the interface between the RAN and the CN. An RNC and associated Node Bs is known as a Radio Network System (RNS).

In the example of FIG. 1 the base stations 109, 111, 113 and 115 are all connected to the same RNC 131.

In the illustrated UMTS cellular communication system, idle or connected mode user equipment remain registered on the network but are dormant and support only a minimum of functions in order to increase battery life. In order to access and activate the user equipment, the UMTS standards comprise paging functionality wherein a paging indication may be transmitted to the user equipment using paging channels. The user equipment monitor the paging channels when in idle mode and if paged activates the functionality required to perform the operations associated with the paging indication. For example, if the paging indication is associated with an incoming call, the user equipment wakes up to perform the required functions to initiate the incoming call.

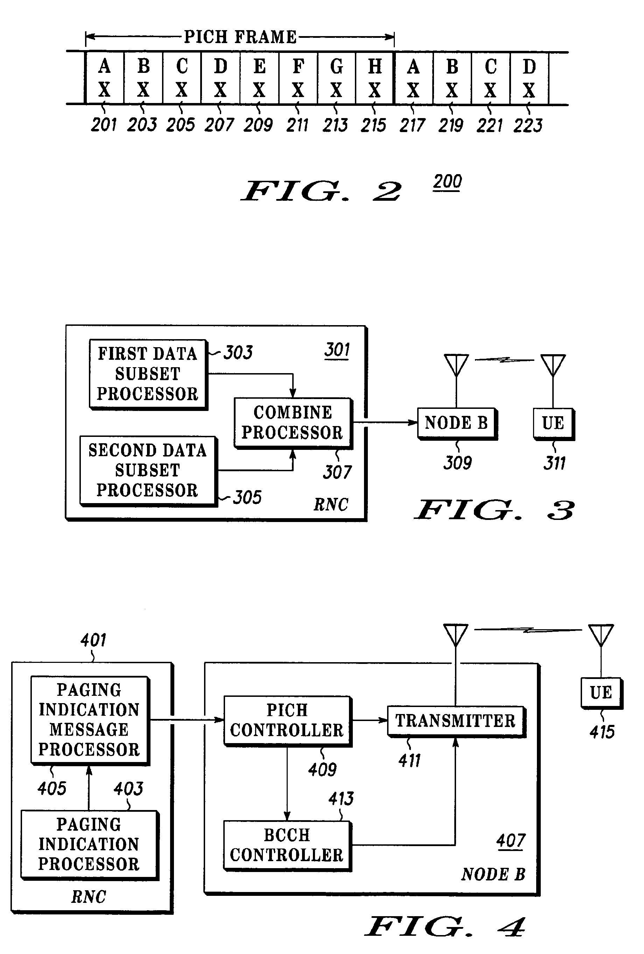

Specifically, the UMTS technical specifications defines a Paging Indication CHannel (PICH) which is used to send paging indications to the user equipment. FIG. 2 illustrates an example of a PICH 200 for a UMTS communication system. The PICH is divided into frames. Each frame comprises eight paging time slots (201-223). The example of FIG. 2 illustrates a first frame comprising eight time slots 201-215 and four time slots 217-223 of the following time frame.

In UMTS, paging indications can only be transmitted to a specific user equipment in certain time slots depending on the identity of the user equipment (the user equipment ID). The number of time slots within a frame in which a paging indication may be sent to a user equipment depends on the service supported by the user equipment.

For example, many services provide that paging indications are transmitted in only one time slot in every frame. Accordingly, the user equipment associated with this service need only monitor a single time slot for paging indications. Thus, a user equipment supporting this service will in idle mode remain dormant for an interval of seven time slots, wake up to monitor a time slot for paging indications directed to it and if none are received power down for another seven time slots. If a paging indication is received, the user equipment proceeds with the operations associated therewith.

In a UMTS communication system, the PICH can thus support many users and many users may be supported within each time slot. In the example of FIG. 2, a first group of users (denoted A) is allocated to the first paging time slot 201, a second group of users (denoted B) is allocated to the second paging time slot 203, a third group of users (denoted C) are allocated to the third paging time slot 205 and so forth. The user equipment of groups A to H have a paging cycle (a DRX cycle) of eight time slots equivalent to one frame, and thus the next time slot that a group A user equipment must monitor is time slot 217, the next time slot that a group B user equipment must monitor is time slot 219 etcetera.

In addition, other user equipment may have different DRX cycles. For example, FIG. 2 illustrates an example where a first group of user equipment (denoted X) has a DRX cycle of four time slots and monitors time slots 201, 209, 217 etc. A second group of user equipment (denoted Y) has a DRX cycle of four time slots and monitors time slots 203, 211, 219 and so forth.

Further details of the paging functionality of UMTS can be found in 3GPP Technical Specifications TS 25.221, 25.304, and 25.331.

In addition to the prescribed structure of the PICH and the paging indication messages transmitted therein, the current UMTS technical specifications account for 12 spare bits in each frame which are not allocated to any specific use.

In accordance with the described specific embodiments, these 12 spare bits are used as a paging indication message supporting a first service. Thus, the 12 spare bits form a first (and preferably only) data section of a paging indication message for a first service.

In the specific embodiment the first service is a Multimedia Broadcast Multicast Service (MBMS) as specified in 3GPP specification 25.331.

In accordance with the embodiment of the invention, the 12 spare bit are used for a paging indication message which supports the MBMS service while allowing for the possible future (or even simultaneously multiplexed) use of the paging indication message for other services.

In a first embodiment of the invention, a paging indication message is created having a single data section which consists in the 12 spare bits of the PICH. The data section is divided into a first and a second subset of data.
Specifically, the first data subset comprises two data bits and the second subset comprises the remaining ten data bits. The first subset is used to indicate which service the paging indication message is related to and the second subset is used to provide further information that can be used by the user equipment to determine which action to take in response to receiving the paging indication message.

Hence, the first data subset allows for specification of a plurality of services and thus the paging indication message may be allocated to a specific service while maintaining the possibility of using the 12 spare bits for other services. This may specifically allow for a standardisation of a paging indication message based on the 12 spare bits for the MBMS service while allowing for a new service requiring a new paging indication message to be standardised in the future. Thus, the approach allows for a high degree of flexibility and for a future proof standards development.

FIG. 3 illustrates elements of a UMTS communication system in accordance with an embodiment of the invention. In this embodiment, the paging indication message is generated in an RNC 301. The RNC 301 comprises means for generating the paging indication message and specifically comprises a first data subset processor 303 that determines the service which the paging indication message is intended for and in response generates the data values of the first subset. Specifically, the RNC 301 may receive a paging message from an application supporting the first service. The paging message may directly comprise information which indicates that a paging indication should be sent or may indirectly comprise information which the RNC 301 determines should result in a paging indication in order to support the first service.

When the RNC 301 receives the message from the application, the first data subset processor 303 determines which service the message is associated with and then determines the appropriate bit values required to indicate this service. Specifically, the first data subset processor 303 may have information of the appropriate bit values for each possible service. For example, it may have predetermined information indicating the direct correspondence between a service and the corresponding data pattern. As an example, it may simply set the bit pattern to 00 when the service is determined as an MBMS service.

In addition the RNC 301 comprises a second data subset processor 305 which generates the second data subset in response to the received paging message. Depending on the service, the second data subset may comprise different information. For example, for an MBMS service, the second data subset may indicate the specific active MBMS service that the paging indication message relates to. In the described embodiment, the second data subset processor 305 simply sets the second subset to a specific predetermined data value in response to a characteristic of the received paging message.

The first data subset processor 303 and the second data subset processor 305 are coupled to a combine processor 307 which combines the first and second data subsets and thereby generates the paging indication message.

It will be appreciated that the described processing is described by reference to different functional modules but that these may be implemented in any suitable way. Specifically, the functionality of the first data subset processor 303, the second data subset processor 305 and the combine processor 307 is preferably implemented in a single data processor under the control of a software or firmware program.

The generated paging indication message is communicated to a base station 309 which transmits the paging indication message as part of the PICH.

A user equipment 311 may support an MBMS service and accordingly monitor for a paging indication message. If one is detected, the first data subset is extracted and the identity of the associated service is determined. If this corresponds to an MBMS service, the user equipment 311 proceeds to activate circuitry and to process the paging indication message using the information of the second data subset as defined for an MBMS service. If no paging indication message is detected, the user equipment 311 powers down until the next time interval in which it is required to monitor for paging indications.

In the embodiment, the paging indication message is not dedicated to a specific user equipment but is directed to all user equipment supporting the first service. Thus a paging indication suitable for broadcast services such as MBMS is preferably provided. In the embodiment, all user equipment receiving the paging indication will independently proceed to perform the operations associated therewith.

In the described embodiment, the paging indication message is intended for a plurality of user equipment. However, different user equipment may have different functionality and, for example use, different paging time slots. Accordingly, transmitting a single paging indication message is generally not sufficient to ensure that all user equipment can receive the paging indication message. Therefore, the paging indication message is preferably transmitted more than once and may for example be transmitted in every frame of the PICH.

However, preferably it is determined when the user equipment can receive the paging indication message and accordingly when it is necessary to transmit the paging indication message. Preferably, the paging indication message is only transmitted when required in order to reduce power consumption and to reduce interference etc.

The paging indication message may comprise any suitable information in the second subset. However, preferably the information comprises an identification of a second message comprising additional information for the first service. This identification may for example be by a specific reference e.g. by the ten data bits of the second subset referring to a specific physical or logical channel. However, the reference may also be indirect and may for example simply consist in an indication of a characteristic of the service which can be used by a user equipment to determine how to receive the second message. In a simple embodiment, the second subset simply specifies a specific active MBMS service and the user equipment is operable to receive the second message in response to this.

In the described embodiment, the second message is transmitted in a different channel than the PICH and preferably it is transmitted in the MBMS Control CHannel (MCCH) defined for UMTS. Accordingly, when a user equipment receives a paging indication message associated with MBMS, it powers up and accesses the MCCH to receive further information associated with the MBMS service. A very short paging indication message on the PICH channel may thus cause the user equipment to receive significant amounts of information by accessing the MCCH channel.

Typically, there will be a delay between the user equipment receiving the paging indication message and it monitoring or receiving on the MCCH. Therefore, the second message on the MCCH is preferably time offset with respect to the paging indication message. Thus, preferably, the base station transmits the paging indication message on the PICH and then after a suitable delay transmits the second message on the MCCH. This allows the user equipment to be ready to receive the second message when it is transmitted.

Alternatively or additionally other approaches may be used to facilitate reception of the second message. Specifically, if the second message is short, it may be desirable to repeat the message a number of times within a paging cycle. This may allow different user equipment monitoring different paging time slots to receive the second message. Alternatively or additionally, it may be desirable to ensure that the second message has a duration of less than a paging cycle such that a user equipment can be ready to monitor for paging indications in the following paging cycle.

In a second embodiment of the invention, sharing of the paging indication message between different services may be achieved by using all 12 spare data bits for information related to the service and using a broadcast channel to transmit information indicating to which service the paging indication message relates. Specifically, paging indication information may be broadcast comprising service identification and scheduling information for the paging indication messages.

FIG. 4 illustrates elements of a UMTS communication system in accordance with the second embodiment of the invention.

An RNC 401 comprises a paging indication processor 403 which is operable to generate a paging indication associated with a first service. Similarly to the first embodiment, the RNC 401 may receive a message from an application and may determine that a paging indication is required in response to this.

The RNC 401 further comprises a paging indication message processor 405 which is operable to generate a paging indication message associated with the first service. Similarly to the first embodiment, the paging indication message is generated by using the 12 spare bits of the PICH channel of the UMTS communication system. Preferably the paging indication simply comprises 12 data bits which by the paging indication message processor 405 are inserted at the appropriate bits of the PICH.

Preferably the first service is an MBMS service and the paging indication simply indicates a specific active service that the current paging indication message relates to.

The paging indication message is communicated from the RNC 401 to a base station 407. The base station 407 comprises a PICH controller 409 which receives the paging indication message and controls a transmitter 411 to transmit the paging indication message on the PICH.

In addition, the PICH controller 409 is coupled to a BCCH controller 413 which is operable to control the transmitter 411 to transmit the UMTS BCCH broadcast channel.

In accordance with the second embodiment, the BCCH controller 413 is operable to generate paging indication information indicating when the paging indication message comprises the first paging indication. Thus, in accordance with the described embodiment, the BCCH comprises information indicating which service the paging indication message is intended for. For example, the paging indication information may simply consist in an identification of the service that is currently active and using the paging indication message.

Alternatively or additionally, the paging indication information may also comprise specific scheduling information that allows a user equipment to determine when a paging indication message is transmitted for a specific service. Thus, the paging indication information may comprise scheduling information indicating when a paging indication message is being transmitted thereby allowing the user equipment to know when it has to power up to receive the paging indication message. This results in reduced power consumption for the mobile.

In the described embodiment, the BCCH controller 413 determines the paging indication information in response to the received paging indication message. However, it will be appreciated that the paging indication information may equally well be generated in for example the RNC.

The transmitter 411 is operable to transmit the PICH and BCCH. A user equipment 415 may thus receive the BCCH channel and therefrom extract the paging indication information. It may then determine if the current paging indication message(s) relate to a service currently supported by the user equipment and if so may monitor for paging indication messages on the PICH. If the paging indication information indicates that the current paging indication message does not relate to a relevant service, it may refrain from monitoring for the paging indication message thereby conserving power.

The described approach allows for an efficient and flexible system. The paging indication message can be multiplexed between services simply by the paging indication information indicating which service the paging indication message relates to. Hence, a paging indication message may be standardised for a specific service such as MBMS while allowing for it later to be used for a different service. Hence, a future proof standardisation approach is facilitated or enabled.

The paging indication information may preferably comprise a simple indication of which service that is currently active. For example, a specific bit pattern may be transmitted indicating that the paging indication messages relate to an MBMS service. If the paging indication messages are changed to relate to a second service, a second bit pattern relating to this service may be sent.

The approach may thus support two or more services. For example, the RNC 401 may comprise a second PICH controller (not shown) which is operable to generate a second paging indication associated with a second service. The paging indication message processor 405 may generate a paging indication message which comprises either the first or second paging indication. Depending on which paging indication is included (and thus which service the paging indication message relates to) the paging indication information is set to indicate either the first or the second paging indication.

The association between the paging indication message and the different services (or paging indications) may be changed as frequently as suitable for the specific application. For example, for a semi-static system where the paging indication message is used only for the first data service until this is replaced by a second data service, the changes may only occur when the switch over between the services take place. In the other extreme, the paging indication information and the paging indication message may change dynamically between subsequent paging indication messages and as frequently as is practically feasible and desirable.

It will be appreciated that the vast majority of the description related to the first embodiment is equally applicable to the second embodiment and for brevity this has not been repeated. As an example, the paging indication message may equally in the second embodiment comprise information which can be used to identify a second message which comprises additional information for the first service.

The invention can be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A network for a 3^{rd} generation cellular communication system comprising:
means for generating a paging indication message; and
means for transmitting the paging indication message in a paging indication channel (PICH);
wherein the paging indication message comprises a first data section comprising a first subset of data bits and a second subset of data bits, the first subset of data bits indicating a first service and the second subset of data bits comprises information for the first service.

2. A network as claimed in claim 1 wherein the paging indication message is common for a plurality of user equipment using the first service.

3. A network as claimed in any previous claim wherein the first data service is a multimode broadcast multicast service (MBMS).

4. A network as claimed in any previous claim further comprising means for determining if a paging indication is required for the first data service and wherein the means for transmitting the paging indication message is operable to transmit the paging indication message only when the paging indication is required.

5. A network as claimed in any previous claim wherein the information for the first service comprises an identification of a second message comprising additional information for the first service.

6. A network as claimed in claim 5 further comprising means for transmitting the second message on a second channel different than the paging indication channel (PICH).

7. A network as claimed in claim 6 wherein the second channel is a MBMS Control CHannel (MCCH).

8. A network as claimed in claim 5 to 7 wherein the second message is time offset with respect to the paging indication message.

9. A network as claimed in any of the claims 5 to 8 wherein the second message has a duration of less than a paging cycle.

10. A network as claimed in any of the claims 5 to 9 wherein the second message is transmitted more than once during a paging cycle.

11. A network as claimed in any of the previous claims wherein the means for generating the paging indication message resides in a Radio Network Controller (RNC).

12. A user equipment for a 3^{rd} generation cellular communication system comprising:
means for receiving a paging indication message in a paging indication channel (PICH); the paging indication message comprising a first data section comprising a first subset of data bits and a second subset of data bits with the first subset of data bits indicating a first service and the second subset of data bits comprising information for the first service;
means for identifying the first service in response to the first subset of data bits; and
means for activating operations of the first data service in response to the identification of the first service and the information of the second subset of data bits.

13. A method of operation for a 3^{rd} generation cellular communication system comprising:
generating a paging indication message; and
transmitting the paging indication message in a paging indication channel (PICH);
wherein the paging indication message comprises a first data section comprising a first subset of data bits and a second subset of data bits, the first subset of data bits indicating a first service and the second subset of data bits comprising information for the first service.

14. A network for a 3^{rd} generation cellular communication system comprising:
means for generating a first paging indication associated with a first service;
means for comprising the first paging indication in a paging indication message;
means for transmitting the paging indication message in a paging indication channel (PICH); and
means for transmitting paging indication information on a broadcast channel, the paging indication information indicating when the paging indication message comprises the first paging indication.

15. A network for a 3^{rd} generation cellular communication system as claimed in claim 14 further comprising
means for generating a second paging indication associated with a second paging service and wherein the paging indication information further indicates when the paging indication message comprises the second paging indication and the means for comprising is operable to comprise either the first paging indication or the second paging indication in the paging indication message.

16. A network as claimed in claim 14 or 15 wherein the broadcast channel is a Broadcast Control CHannel (BCCH).

17. A network as claimed in any of the claims 14 to 16 wherein the paging indication message is common for a plurality of user equipment using the first service.

18. A network as claimed in any of the claims 14 to 17 wherein the first data service is a multimode broadcast multicast service (MBMS).

19. A network as claimed in any of the claims 14 to 18 further comprising means for determining if a paging indication is required for the first data service and wherein the means for transmitting the paging indication message is operable to transmit the paging indication message only when the paging indication is required.

20. A network as claimed in any of the claims 14 to 17 wherein the first paging indication comprises an identification of a second message comprising additional information for the first service.

21. A network as claimed in claim 20 further comprising means for transmitting the second message on a second channel different than the paging indication channel (PICH).

22. A network as claimed in claim 21 wherein the second channel is a MBMS Control CHannel (MCCH).

23. A network as claimed in claim 20 to 22 wherein the second message is time offset with respect to the paging indication message.

24. A network as claimed in any of the claims 20 to 23 wherein the second message has a duration of less than a paging cycle.

25. A network as claimed in any of the claims 20 to 24 wherein the second message is transmitted more than once during a paging cycle.

26. A network as claimed in any of the previous claims 14 -25 wherein the means for generating the first paging indication resides in a Radio Network Controller (RNC).

27. A network as claimed in any of the previous claims 14 -25 wherein the paging indication information comprises scheduling information associated with the paging indication channel.

28. A user equipment for a 3^{rd} generation cellular communication system comprising:
means for receiving paging indication information on a broadcast channel, the paging indication information indicating when a paging indication message comprises a first paging indication associated with a first service;
means for receiving the paging indication message in a paging indication channel (PICH) in response to the paging indication information; and
means for activating operations of the first data service in response to the first paging indication.

29. A method of operation for a 3^{rd} generation cellular communication system comprising:
generating a first paging indication associated with a first service;
comprising the first paging indication in a paging indication message;
transmitting the paging indication message in a paging indication channel (PICH); and
transmitting paging indication information on a broadcast channel, the paging indication information indicating when the paging indication message comprises the first paging indication.
